Europäisches Patentamt

European Patent Office

Office européen des brevets

(11) Numéro de publication: **0 354 136**
**A1**

## (12) DEMANDE DE BREVET EUROPEEN

(21) Numéro de dépôt: **89420266.2**

(22) Date de dépôt: **21.07.89**

(51) Int. Cl.⁵: **B 25 H 1/04**
**B 25 H 1/10, B 23 D 45/06,**
**B 23 D 57/00, B 27 C 9/04**

(30) Priorité: **25.07.88 FR 8810342**
**11.07.89 FR 8909661**

(43) Date de publication de la demande:
**07.02.90 Bulletin 90/06**

(84) Etats contractants désignés:
**AT BE CH DE ES GB GR IT LI LU NL SE**

(71) Demandeur: **Fournel, Paul**
**12 Allée des Chênes**
**F-42580 L'Etrat (FR)**

(72) Inventeur: **Fournel, Paul**
**12 Allée des Chênes**
**F-42580 L'Etrat (FR)**

(74) Mandataire: **Dupuis, François**
**Cabinet Charras 3 Place de l'Hôtel-de-Ville BP 203**
**F-42005 St. Etienne Cédex 1 (FR)**

(54) Structure polyvalente pour tous travaux d'usinage principalement de matériaux tendres.

(57) Structure polyvalente pour tous travaux d'usinage principalement de matériaux tendres.

L'objet de l'invention se rattache au secteur technique des machines-outils universelles.

La structure selon l'invention comprend un bâti rigide (B) de forme générale parallélélipipédique qui est agencée avec des moyens (8) de guidage à coulissement et des moyens-supports orientables (19) pour un porte-outils (23) et un moteur (P) d'entraînement en rotation des outils et avec des moyens complémentaires de guidage, de support et d'entraînement pour des organes et dispositifs annexes autorisant en combinaison avec lesdits outils motorisés, une pluralité d'opérations d'usinage différentes sur des matériaux divers, aussi bien avec le bâti positionné verticalement qu'horizontalement ; ledit bâti etant également équipé d'un moyen de transport manuel.

FIG.1

EP 0 354 136 A1

Description

**Structure polyvalent pour tous travaux d'usinage principalement de matériaux tendres.**

L'objet de l'invention se rattache au secteur technique des machines-outils universelles portatives.

On connaît des machines portatives du type perceuse, scie, rabot..., des blocs-moteurs sur lesquels peuvent s'adapter des accessoires particuliers à chaque opération d'usinage.

Ces machines portatives par leur spécificité ne permettent pas de réaliser des opérations d'usinage variées comme celle ayant fait l'objet des Brevets canadien 1.078.709 et américain 3.036.608, ou bien il faut acquérir des accessoires les transformant en poste en poste fixe, mais la mise en oeuvre est fastidieuse, la précision et la rigidité aléatoires.

Les blocs moteurs et leurs accessoires autorisent un certain nombre d'opérations d'usinage mais là aussi, on retrouve les mêmes inconvénients.

D'autre part, le transport de ces deux types de machines avec leurs accessoires sur des chantiers par exemple, s'avère difficile compte tenu du poids total et de la disparité des appareils.

On connaît également des machines fixes combinant plusieurs opérations telles que sciage-ponçage, rabotage-dégauchissage, tournage-perçage. Ces machines telles que celle décrite dans le Brevet français 2.578.770 sont encombrantes et lourdes, donc intransportables, et le coût de l'investissement matériel et outillage est important pour une utilisation réduite.

Pour obvier à ces inconvénients et offrir aussi bien aux professionnels qu'aux particuliers bricoleurs, une machine universelle, légère, aisément transportable, d'une mise en oeuvre rapide, et permettant de réaliser sensiblement toutes les opérations classiques d'usinage de matériaux tendres, on a conçu la structure polyvalente selon l'invention.

Selon une première caractéristique, cette structure se compose d'un bâti rigide de forme générale parallélépipédique qui est agencé avec des moyens de guidage à coulissement et des moyens-supports orientables pour un porte-outils et par un organe moteur d'entraînement en rotation des outils et avec des moyens complémentaires de guidage, de support et d'entraînement pour des organes et dispositifs annexes autorisant en combinaison avec lesdits outils motorisés, une pluralité d'opérations d'usinage différentes sur des matériaux divers, aussi bien avec le bâti positionné verticalement qu'horizontalement ; ledit bâti étant également équipé d'un moyen de transport manuel.

Selon une autre caractéristique, le bâti comprend deux cadres parallèles reliés entre eux en partie basse par deux traverses fixes et équipé de deux traverses amovibles ; dans leur partie médiane, lesdits cadres portant des coulisses parallèles pour le guidage et le déplacement des moyens associés au porte-outils et au moteur d'entraînement.

Une autre caractéristique se trouve dans le fait que les moyens de guidage à coulissement et de support orientable sont constitués d'un traînard assujetti aux coulisses, et d'un chariot croisé monté rotatif sur le traînard ; ledit chariot portant de manière réglable le porte-outils du moteur de commande.

Selon une autre caractéristique, pour permettre les opérations d'usinage avec axe moteur vertical ou horizontal, le traînard est associé à un organe manuel de commande en translation relié au bâti.

Une autre caractéristique se trouve dans le fait que des barres amovibles associées aux traverses pour servir de rallonges de table et de poignée de transport reçoivent un ou des dispositifs démontables comprenant chacun un collier croisé dont l'une des ouvertures est traversée par la barre précitée et l'autre ouverture par la plus longue branche d'une équerre à section cylindrique dont l'autre branche constitue un axe de rotation pour un galet retenu par une vis et une rondelle ; ces dispositifs associés dans leur ensemble ou partiellement avec lesdites barres fixées en des points déterminés de la structure ou de certains de ses équipements, remplissent différentes fonctions, telles que guides, rallonges, supports, butées, presseurs, vérins...

Selon une autre caractéristique, mise en oeuvre pour améliorer le rendement dans les opérations de copiage, le chariot croisé est équipé d'un dispositif de montage du palpeur à tension d'appui constante sur le profil du modèle ou du gabarit.

Selon une autre caractéristique mise en oeuvre pour améliorer la sécurité, la scie circulaire montée dans une broche en bout d'un bras orientable par rapport au chariot croisé, est recouverte dans sa partie en débordement de la table de travail par un carter articulé à un couteau diviseur monté sur le bras portant la broche porte-outils, pour suivre les orientations de la scie.

Ces caractéristiques et d'autres encore ressortiront de la description qui suit.

Pour fixer l'objet de l'invention sans toutefois le limiter, dans les dessins schématiques annexés :

- La figure 1 est une vue en perspective illustrant séparément les principaux éléments de la structure selon l'invention.

- La figure 2 est une vue en plan de la structure montrant notamment les traverses supérieures mobiles et la table supérieure, en position scie circulaire et déployée de part et d'autre.

- La figure 3 st une vue de profil montrant le déploiement maximum d'un seul côté.

- La figure 4 est une vue en perspective de la structure en position transport.

- Les figures 5, 6 et 7 sont des vues en coupe illustrant la commande du traînard respectivement par pignon-crémaillère, par vis mère débrayable et par levier.

- La figure 8 est une vue en coupe illustrant notamment l'ensemble traînard-chariot-porte-outils.

- La figure 9 est une vue montrant la position moulurage de la table supérieure.

- La figure 10 est une vue illustrant le réglage angulaire du porte-outils.

- Les figures 11 et 12 sont des vues illustrant respectivement la position ponçage ou affûtage, et la position rainurage ou perçage horizontal.

- La figure 13 est une vue en coupe illustrant l'ensemble de dégauchissage et de rabotage.

- La figure 14 est une vue en coupe montrant la position toupillage.

- La figure 15 est une vue en coupe illustrant la position tournage entre pointes avec copiage par pièce modèle.

- La figure 16 est une vue montrant le copiage par gabarit.

- La figure 17 est une vue en coupe montrant l'adaptation et la commande d'une scie sauteuse.

- La figure 18 est une vue en coupe illustrant l'adaptation d'une scie à chantourner.

- La figure 19 est une vue de côté illustrant l'adaptation d'un plateau diviseur.

- La figure 20 est une vue en perspective de la structure polyvalente représentée en position de transport et bridée sur un plan de travail.

- La figure 21 est une vue en perspective partielle illustrant un étau positionné sur l'un des cadres de la structure.

- La figure 22 est une vue en coupe transversale de l'étau selon la figure 21.

- La figure 23 est une vue en plan partielle montrant un montage pour l'affûtage d'une scie circulaire.

- La figure 24 est une vue en perspective illustrant séparément les éléments composant un dispositif multi-fonctions.

- La figure 25 est une vue schématique montrant l'utilisation du dispositif selon figure 24 en rallonge de table de sciage d'un seul côté.

- La figure 26 est une vue de côté considérée selon la ligne 26-26 de la figure 25.

- La figure 27 est une vue schématique montrant l'utilisation du dispositif selon figure 24 en rallonge de table de rabotage des deux côtés.

- La figure 28 est une vue en plan à caractère schématique illustrant le guidage et le maintien des pièces à usiner avec le dispositif multi-fonctions associé à un organe presseur.

- La figure 29 est une vue en coupe partielle montrant un dispositif multi-fonctions formant vérin ou bride de fixation de pièces à rainurer par exemple.

- La figure 30 est une vue en perspective illustrant des dispositifs multi-fonctions combinés pour servir de butée anti-relevage de pièces déplacées sur la table de sciage.

- La figure 31 est une vue de côté illustrant l'adaptation d'un dispositif multi-fonctions pour le guidage d'une scie sauteuse.

- La figure 32 est une vue en perspective partielle montrant l'adaptation d'un dispositif multi-fonctions pour le montage et le guidage d'une scie à chantourner.

- La figure 33 est une vue en plan partielle illustrant les dispositifs multi-fonctions utilisés pour la tenue entre pointes des modèles en copiage.

- La figure 34 est une vue en coupe partielle illustrant un dispositif multi-fonctions utilisé pour le montage d'un gabarit de copiage.

- La figure 35 est une vue en coupe transversale illustrant le chariot croisé équipé d'un dispositif de montage d'un palpeur de copiage à tension d'appui constante contre le profil du modèle ou du gabarit.

- La figure 36 est une vue schématique illustrant le montage d'un carter de protection de la scie circulaire.

- La figure 37 est une vue en plan partielle montrant l'équipement du guide orientable de coupe avec le dispositif multi-fonctions en vue d'opérations de tenonnage.

- La figure 38 est une vue en coupe partielle illustrant un équipement complémentaire pour effectuer des perçages à grande profondeur avec l'organe moteur fixé sur le chariot croisé.

Afin de rendre plus concret l'objet de l'invention, on le décrit maintenant d'une manière non limitative en se référant aux exemples de réalisation des figures des dessins.

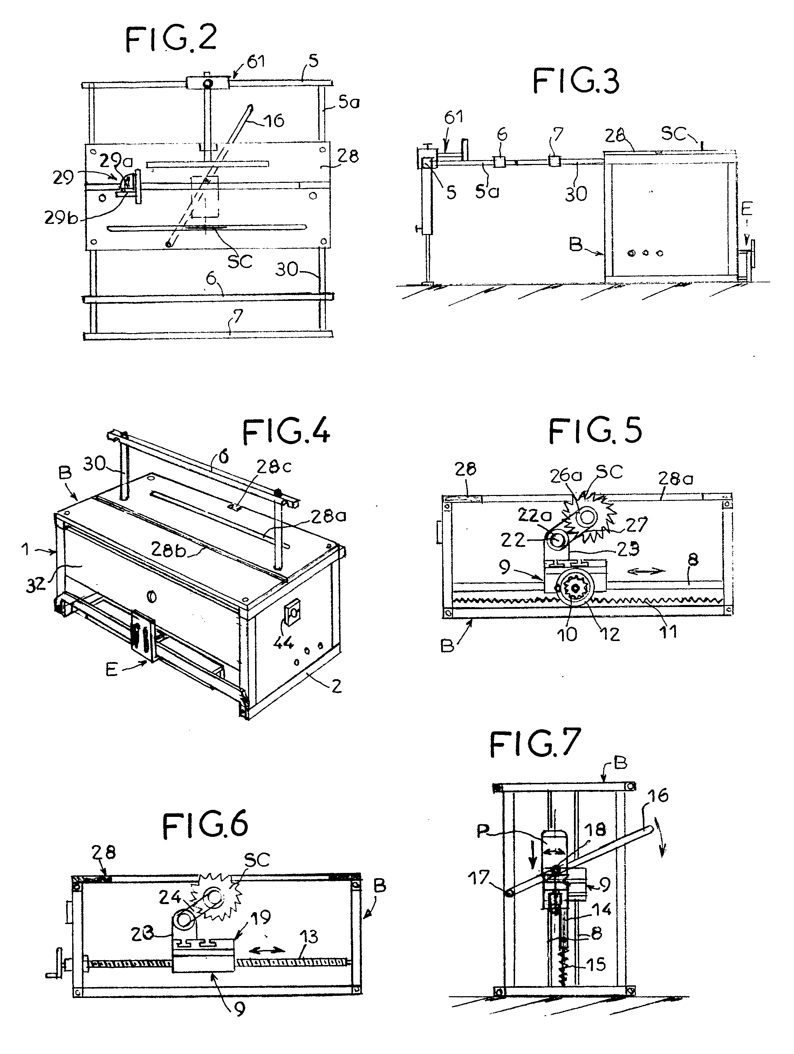

La structure selon l'invention comprend un bâti (B) de forme générale parallélépipédique qui est composé de deux cadres parallèles (1 - 2) convenablement renforcés et réunis entre eux en partie basse par deux traverses fixes (3 - 4). Le bâti présente également des traverses amovibles (5, 6, 7) dont l'une porte aux extrémités des barres transversales (5a) engagées à coulissement dans le profilé supérieur des cadres (1 et 2), tandis que les autres présentent des encoches (6a - 7a) de positionnement par clipsage sur les barres (5a). la traverse (5) avec ses barres (5a) supporte un guide de délignage (61). L'ensemble coulisse dans les profilés supérieurs des cadres, et deux barres (30) vissées dans les barres (5a) servent de rallonge de table dont les supports sont constitués par les traverses amovibles (6 - 7). Les barres (5a et 30) peuvent être réparties de chaque côté de la table (figure 2) ou positionnées d'un seul côté (figure 3) suivant les besoins.

Des coulisses parallèles (8) sont fixées entre les cadres (1 et 2) aproximativement dans leur partie médiane dans la hauteur, pour assurer le guidage d'un traînard (9) équipé de manière connue d'un dispositif de commande en translation du type pignon (10) - crémaillère (11) avec volant (12) de manoeuvre (figure 5) ou par vis-écrou débrayable (13) (figure 6) ou bien encore par un levier (16) articulé en (17) sur une traverse fixe et relié avec jeu en (18) au traînard (figure 7). Dans cette position verticale du bâti, un tube coulissant (14) est assujetti au traînard en appui sur un ressort télescopique (15) pour le rappel du traînard dans une position. Bien entendu, il est possible de prévoir les déplacements du traînard par ces différents dispositifs combinés entre eux, afin de disposer suivant l'opération d'usinage concernée d'un réglage précis ou approximatif.

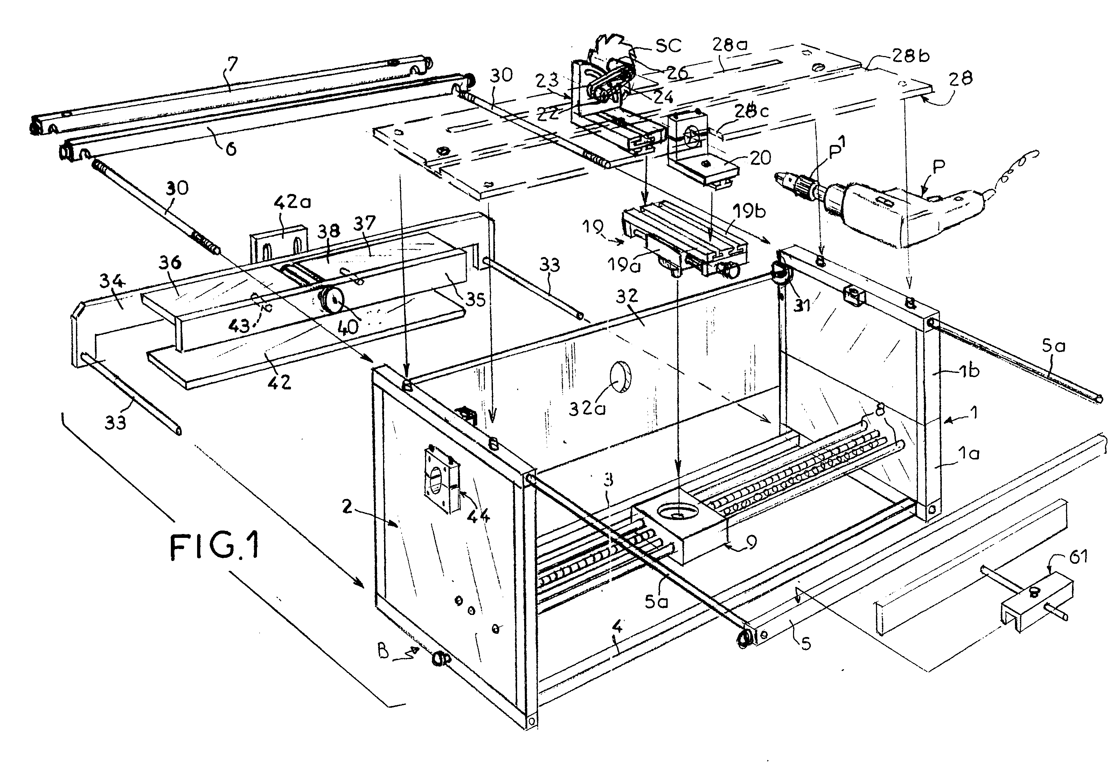

Le traînard (9) reçoit de manière orientable et de préférence avec des positions intermédiaires d'indexation angulaire, un chariot croisé (19) du type chariot de tour, c'est-à-dire formé d'un socle (19a) rotatif par rapport au traînard et d'un chariot transversal (19b) réglable en translation par rapport au socle (figure 1).

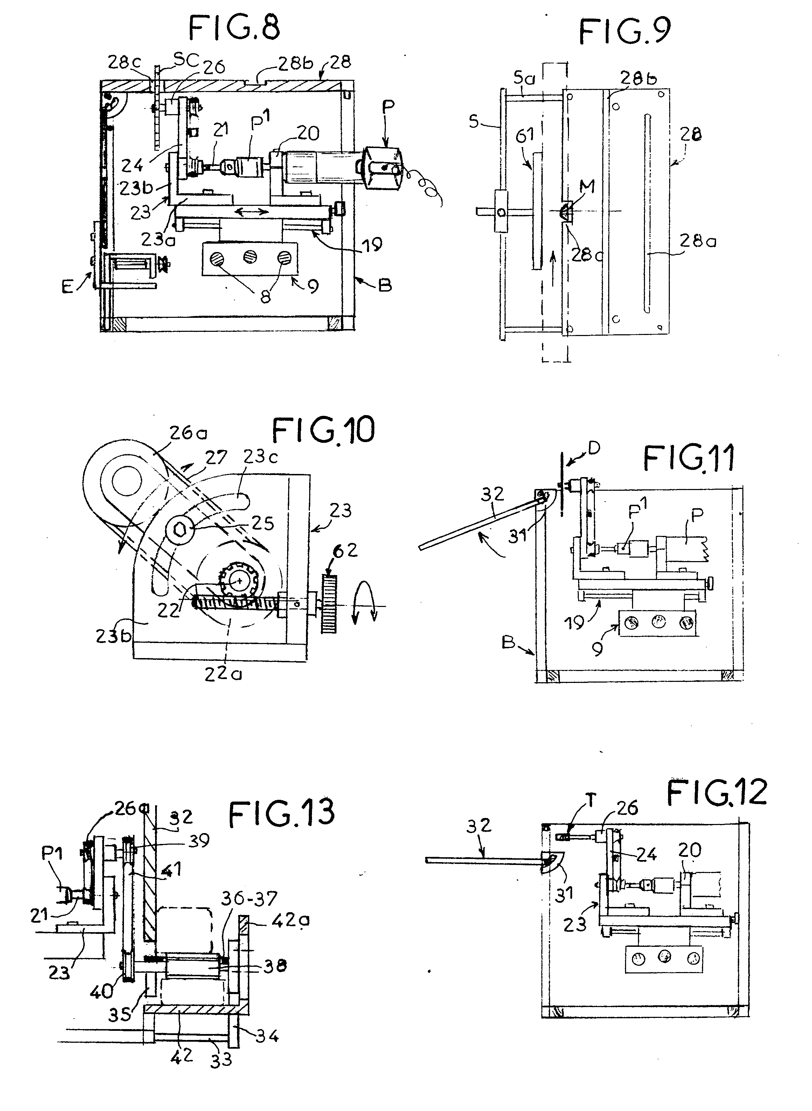

Le chariot transversal (19a) est équipé pour recevoir à coulissement un collier équerré (20) destiné à la fixation d'un organe moteur qui peut être une perceuse portative (P), un bloc-moteur ou un moteur. L'arbre de sortie de l'organe moteur présente de manière classique un dispositif d'entraînement du genre mandrin de serrage (P1) dans lequel est bloquée une tige (21) agencée en bout pour coopérer angulairement avec un axe (22) monté en rotation libre sur un porte-outils équerré (23) fixé à coulissement par sa semelle (23a) sur le chariot transversal (19a) (figure 8).

Concentriquement à l'axe (22) est articulé avec jeu un bras (24) qui peut être orienté par rapport à la branche verticale (23b) du porte-outils par un système vis-crémaillère (62) et bloqué en toutes positions entre l'horizontale et la verticale par un système vis-écrou (25) coopérant avec une lumière (23c) semi-circulaire de la branche (23b) dont le rayon a pour centre l'axe (22) (figure 10).

A l'extrémité du bras (24) est montée à rotation libre et sur roulement une broche (26) pour la fixation d'outils divers soit par nez, soit encore par pince expansible.

La broche est entraînée en rotation par une transmission du type poulies (22a - 26a) et courroie crantée (27) ou bien par un train d'engrenages (figure 10).

Une table supérieure (28) assujettie de toute manière démontable et selon plusieurs positions sur les cadres, présente une fonte longitudinale (28a) sur la plus grande partie de sa longueur pour le passage d'une scie circulaire (C) ou autre, montée sur la broche (26), et une rainure longitudinale (28b) pour un guide de coupe orientable (29), ainsi qu'une échancrure latérale et médiane (28c) pour le passage d'un outil de moulurage (M) monté sur la broche (26) (figure 9). La table (28) étant positionnée sur le bâti en fonction du type d'opérations à effectuer.

Les rallonges (30) de la table peuvent être vissées dans des trous verticaux des cadres et reliées par une traverse pour constituer une poignée de transport de la structure (figure 4).

Selon une caractéristique, on associe les barres (30) à des dispositifs démontables référencés dans leur ensemble en (DD) et destinés à remplir de nombreuses fonctions, suivant leurs adaptations comme on verra par la suite.

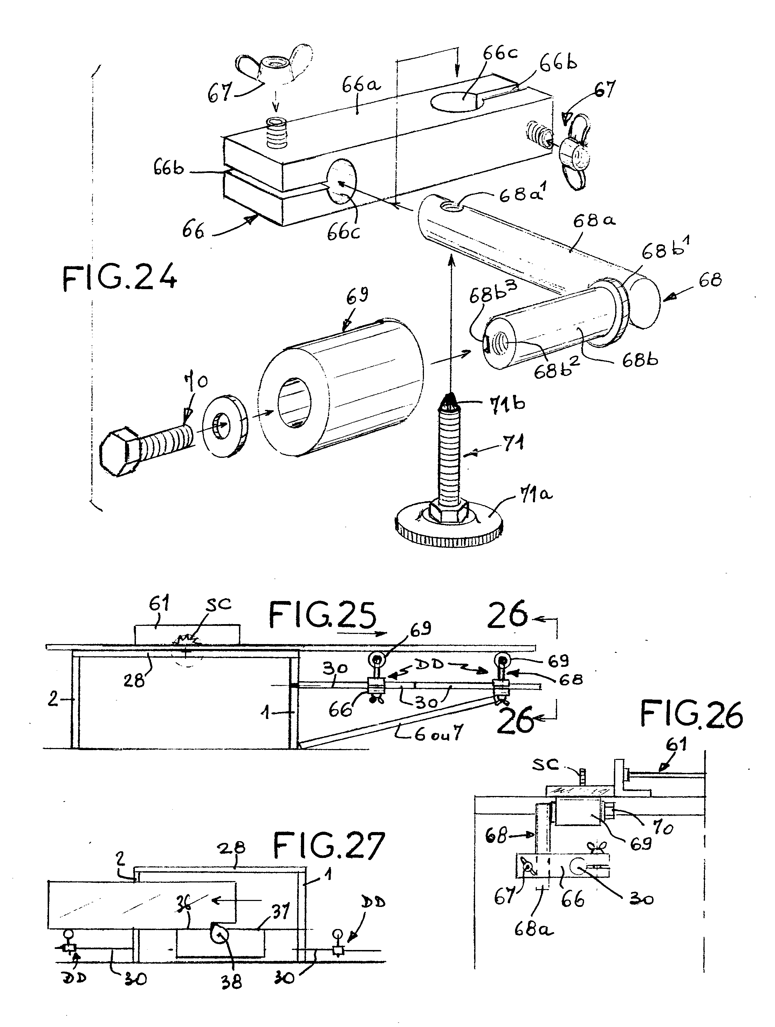

On a illustré à la figure 24 les composants de chaque dispositif multi-fonctions : un collier croisé (66) formé dans un bloc parallélépipédique (66a) présentant deux fentes d'extrémité (66b) orientées à 90° l'une de l'autre et débouchant dans deux orifices circulaires (66c) orientés de la même manière. Chaque extrémité fendue est équipée d'une visserie (67) de serrage des colliers autour de pièces cylindriques telles que les barres (30) ou la plus longue branche (68a) d'une équerre à section cylindrique (68) dont l'autre branche (68b) constitue un axe de rotation pour un galet (69) monté en butée contre un épaulement (68b1) et maintenu en translation par une vis (70) engagée dans un trou taraudé (68b2) d'extrémité. On voit encore à la figure 24 une vis (71) à tête de manœuvre (71a) largement dimensionnée et à extrémité effilée (71b), pouvant être engagée dans un trou taraudé (68a1) établi transversalement près de l'extrémité de la branche (68a). Cette vis (71) peut être avantageusement l'une des vis utilisées pour solidariser les barres (30) avec la traverse (6 ou 7) en vue de constituer la poignée de transport de la structure.

Comme on le voit aux figures 25 et 26, les dispositifs (DD) peuvent être montés sur une ou plusieurs barres (30) mises bout-à-bout et fixées extérieurement au cadre (1 ou 2) de telle sorte que l'on constitue une rallonge de la table de sciage pour travailler sur des pièces longues et flexibles qui reposent alors sur les galets (69) positionnés en alignement de la table (28). A noter qu'une traverse (6 ou 7) peut être disposée en étaiement entre le cadre (1 ou 2) et un dispositif (DD). On peut également mettre en place un ensemble dispositif (DD) - barre (30) de chaque côté de la table, comme illustré à la figure 27 où ces ensembles sont fixés aux cadres pour que les galets (69) soient dans l'alignement des demi-tables (36 - 37) de la dégauchisseuse-raboteuse.

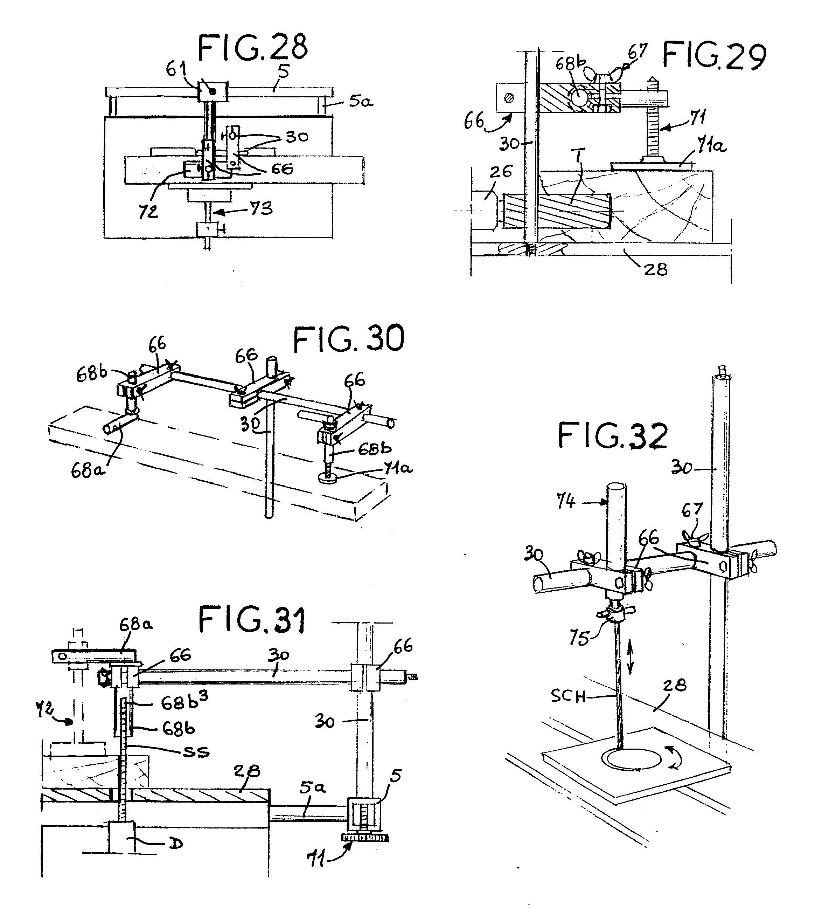

Suivant une autre adaptation des dispositifs (DD) illustrée à la figure 28, on fixe verticalement une barre (30) sur le support (23) présentant à cet effet des orifices taraudés ou lisses, on monte sur cette barre un collier croisé (66), puis on fixe horizontalement une autre barre (30) sur ledit collier ; la deuxième barre est alors reliée à un deuxième collier croisé (66) qui porte à son tour un organe presseur (72) destiné soit à être mis en pression sur la pièce si celle-ci est fixe pendant le travail, soit à être seulement appliqué à coulissement par rapport à la pièce mobile pendant le travail. Un autre organe presseur ou de butée (73) peut être placé à l'opposé du support de délignage (61) pour assurer le blocage ou le guidage à coulissement de la pièce, lors des opérations de moulurage.

Pour effectuer des opérations de rainurage ou de toupillage avec un outil (T) monté sur la broche (26), on peut utiliser deux dispositifs (DD) montés sur des barres (30) solidaires de la table (28) et fixés en alignement du bâti, comme illustré à la figure 29. Dans ce cas, on enlève les galets (69) pour fixer l'axe (68b) des équerres (68) dans un des orifices (66c) des colliers suivant une position horizontale, et on monte sur l'autre branche (68a) la vis de manœuvre (71) dont la tête (71a) peut être appliquée en pression sur la pièce, en constituant ainsi des vérins.

Selon des variantes illustrées à la figure 30, on peut bloquer une pièce ou l'empêcher de se relever accidentellement en combinant les différents composants des dispositifs (DD) et les barres (30). Par exemple, on peut fixer verticalement une barre (30) sur la structure, un collier croisé (66) sur cette barre, puis une deuxième barre (30) horizontalement, portant à chaque extrémité un collier croisé (66) avec soit une équerre (68) engagée par sa branche (68b) et en appui par sa branche (68a) sur la pièce, soit une équerre (68) engagée par sa branche (68b) en appui sur la pièce par la vis de manoeuvre (71) montée en bout.

Le guide de coupe (29) est constitué d'un support (29a) en éuerre orientable sur lequel coulisse un renvoi équerré (29b) permettant de réaliser des coupes angulaires et servant de positionnement rigide pour des opérations de tenonnage. Le guide peut être immobilisé pour tronçonner des pièces par déplacement de la scie à l'aide du levier (16).

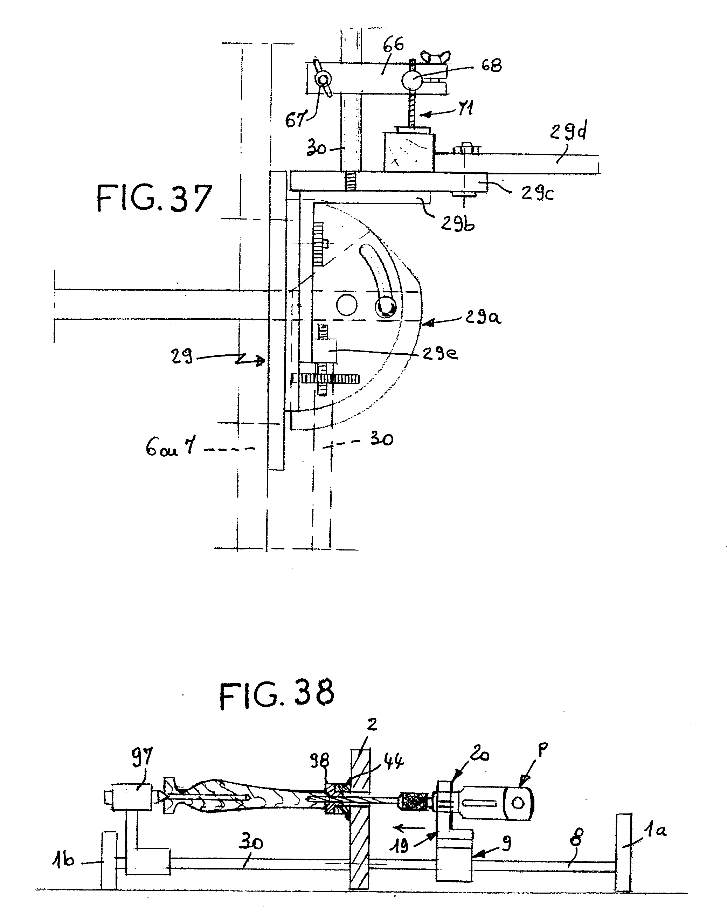

Le renvoi équerré (29b), reçoit un support de tenonnage (29c) portant un capot de protection (29d). La pièce à usiner peut être butée contre ledit capot et être maintenue par un dispositif multi-fonctions, c'est-à-dire par une vis de manoeuvre (71) engagée dans une équerre (68) qui est portée par un collier croisé (66) fixé sur une barre (30) elle-même reliée au support (29c), comme on le voit à la figure 37. A noter qu'une traverse (6 ou 7) peut être fixée sur le guide (29) pour prolonger le guidage et servir de butée avec le support de délignage (61). De même, une autre barre (30) peut être vissée sur un élément (29e) du dispositif de réglage du renvoi équerré (29b), pour constituer une butée à l'aide d'un collier croisé (66).

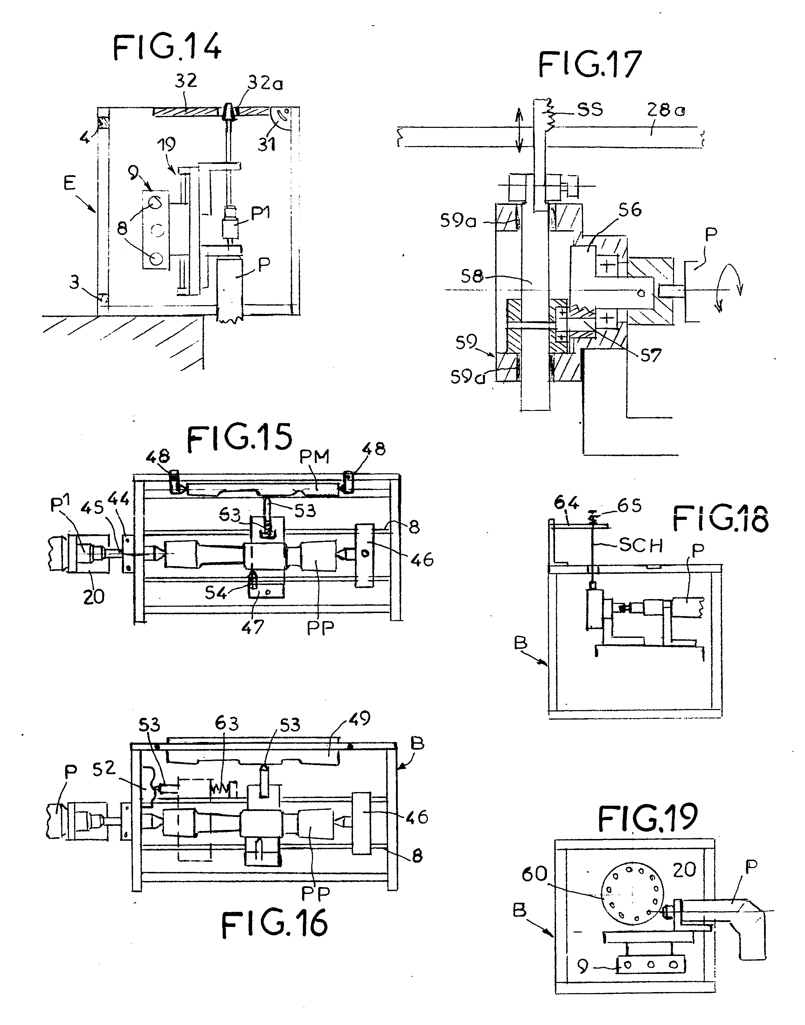

A la partie supérieure des cadres (1 et 2) et du côté de la broche (26) s'articule, suivant deux niveaux, de préférence par compas de réglage et de blocage (31), une plaque (32) constituant une table supplémentaire qui, lorsqu'elle est en position haute et horizontale ou inclinée (figure 11), donne accès à un outil du type disque de ponçage ou d'affûtage (D). Elle sert également de carter de protection et de guide de dégauchissage en position verticale. Lorsqu'elle est relevée horizontalement et placée dans la position basse (figure 12), elle permet des opérations de perçage horizontal ou de rainurage. De plus, elle sert de table de toupillage et à cet effet elle présente une ouverture (32a) pour le passage d'un outil de toupillage ou de moulurage (T) (figure 14) monté sur l'organe moteur avec axe de rotation vertical par pivotement à 90° du bâti, seul l'organe moteur étant en porte-à-faux du plan de repos du bâti.

A la partie inférieure, les cadres (1 et 2) sont agencés transversalement pour recevoir à coulissement contrôlé un ensemble (E) de corroyage formant à la fois dégauchisseuse et raboteuse escamotable à l'intérieur du bâti en vue du transport. Cet ensemble (figures 1 et 13) comprend à cet effet deux barres (33) de montage dans les cadres (1 et 2) reliés en bout par une traverse avant (34) qui, en combinaison avec une traverse arrière (35) et des entretoises, permet le positionnement de deux demi-tables (36 - 37) décalées dans la hauteur de manière réglable pour déterminer une profondeur de passe de dégauchissage par un outil rotatif (38) monté entre les deux traverses dans l'ouverture entre les deux demi-tables avec la circonférence de coupe tangentielle à la demi-table la plus haute ou table de sortie. L'outil (38) est entraîné en rotation depuis la broche (26) par l'intermédiaire d'une transmission à poulies (39 - 40) et courroie crantée (41).

Dans sa partie médiane, la traverse avant (34) est agencée pour guider de manière réglable en hauteur un support de rabotage (42) constitué à cet effet d'une patte verticale (42a) de liaison avec la traverse et d'une table-support horizontale (42b) pour le positionnement de la pièce à raboter par l'outil rotatif (38).

Des rouleaux (43) sont montés rotatifs entre les deux traverses de part et d'autre de l'outil (38) avec un rappel élastique en direction de la pièce à raboter, et un moyen d'entraînement en rotation du type volant ou manivelle est associé à l'un des rouleaux, pour assurer le déplacement de la pièce.

Le cadre (1) est de préférence exécuté en deux parties (1b - 1c) séparables. La partie supérieure (1b) peut être enlevée (après démontage du compas d'articulation de la plaque (32), pour laisser le passage à l'organe moteur (P) lorsque le bâti (B) est disposé verticalement (figure 6) pour des opérations de perçage vertical ou angulaire ou fraisage et toupillage. Cette partie (1b) peut être alors assujettie au cadre (2) afin de constituer une rallonge de table de perçage.

Comme on le voit aux figures, le cadre (2) est équipe d'un collier de serrage (44) pour le montage et la fixation à l'extérieur de l'organe moteur soit directement soit par le support équerré (20) fixé sur une semelle.

Pour les opérations de tournage entre pointes, un dispositif entraîneur (45) est monté sur la broche (26) ou le mandrin de l'organe moteur et une contrepointe tournante mobile (46) est associée aux coulisses (8). La capacité de travail entre pointes peut être augmentée par des rallonges de coulisses qui peuvent être avantageusement constituées par les rallonges (30) de la traverse (5) dont l'extrémité libre peut être solidarisée à la demi-partie (1b) du cadre (1) afin de constituer un support arrière. Pour les opérations de tournage en l'air, la broche (26) est équipée, soit d'un nez fileté, soit d'un plateau porte-pièce, soit encore d'un mandrin à mors.

Bien entendu, le tournage en l'air ou en contre-pointes s'opère par des outils appropriés montés alors sur une tourelle réglable (47) portée par le chariot transversal (19a). Le déplacement longitudinal du traînard est commandé par pignon-crémaillère ou par vis-écrou. La commande de la vis peut être soit manuelle par volant soit automatique par liaison à la transmission avec un réducteur à engrenages. Pour la solution tour à reproduire ou à copier, la vis est remplacée par un ressort de rappel du chariot. Pour le copiage longitudinal (figure 15) des pointes mobiles (48) peuvent être montées coulissantes sur une traverse fixée aux cadres (1 et 2) pour le positionnement des pièces modèles (PM), ou bien (figure 16) un gabarit en tôle (49) est pincé entre deux traverses fixées entre les cadres (1et 2). Pour le copiage frontal (figure 16) un support de gabarit (52) peut être positionné à l'intérieur du cadre (2). Le palpeur (53) est relié de manière connue au chariot transversal (19a) lequel par sa tourelle (47) porte l'outil de profilage (54) déplaçable contre la pièce à profiler (PP) par une poignée de manoeuvre ou un système vis-écrou, après débrayage des commandes classiques. Un ressort (63) assure le rappel du traînard.

Il est encore prévu un dispositif (D) remplaçant le porte-outils (23) et destiné à entraîner une scie alternative à découper ou scie sauteuse orientable (SS). Pour cela, différents moyens classiques peuvent être mis en oeuvre pour transformer le mouvement de rotation de l'organe moteur (P) en un mouvement rectiligne alternatif de la scie. Par exemple et comme illustré schématiquement à la figure 17, l'organe moteur est relié angulairement à un plateau rotatif (56) portant un maneton (57) sur lequel s'articule une biellette (58) reliée à la monture de la scie et guidée à coulissement dans un fourreau (59a) formé sur un corps-support (59) solidaire du collier équerré (20).

Il est prévu de guider la lame de scie dans ses déplacements alternatifs. Pour cela, on peut utiliser le dispositif multi-fonctions (DD) comme le montre la figure 31. A cet effet, on fixe verticalement soit sur la table (28) soit sur une traverse de rallonge (5), une barre (30), un collier croisé (66) portant horizontalement une deuxième barre (30) portant à son tour un deuxième collier croisé (66) dans lequel on engage et on fixe la branche (68b) de l'équerre.

Ladite branche (68b) présente sur une partie de sa hauteur une rainure (68b3) que l'on va aligner avec la lame de la scie afin de réaliser un guidage empêchant toute flexion. Un troisième collier croisé (66) peut alors être fixé sur l'autre branche (68a) pour recevoir un organe presseur (72) empêchant le relevage de la pièce.

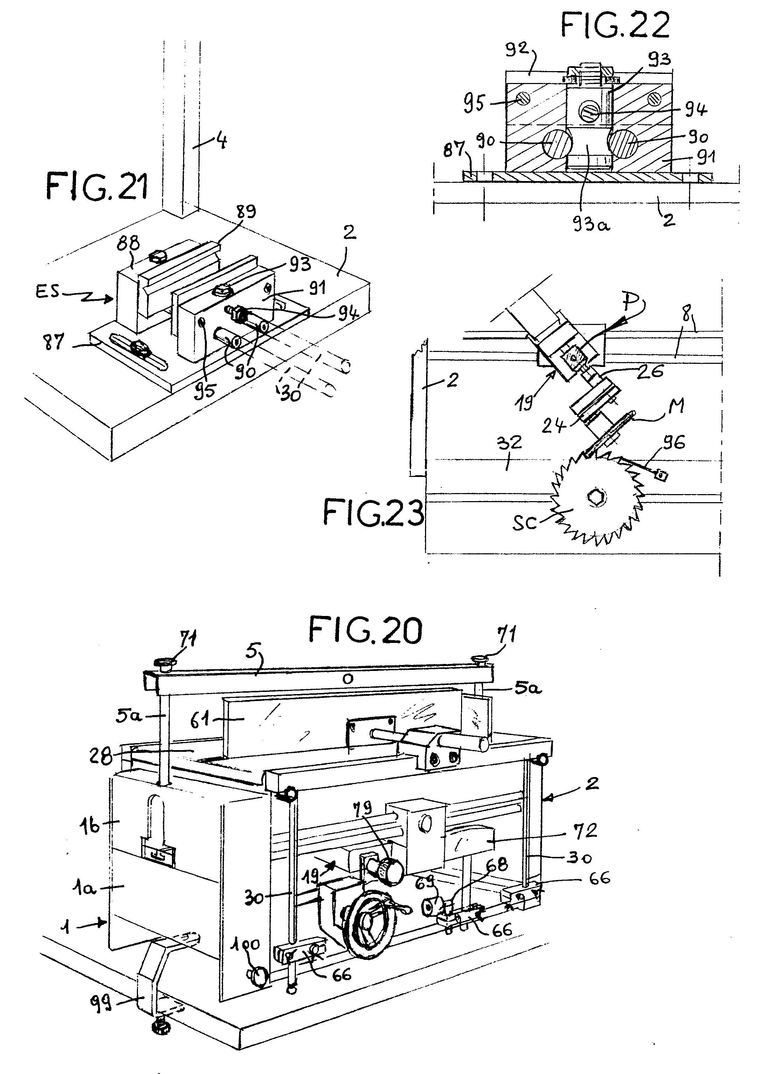

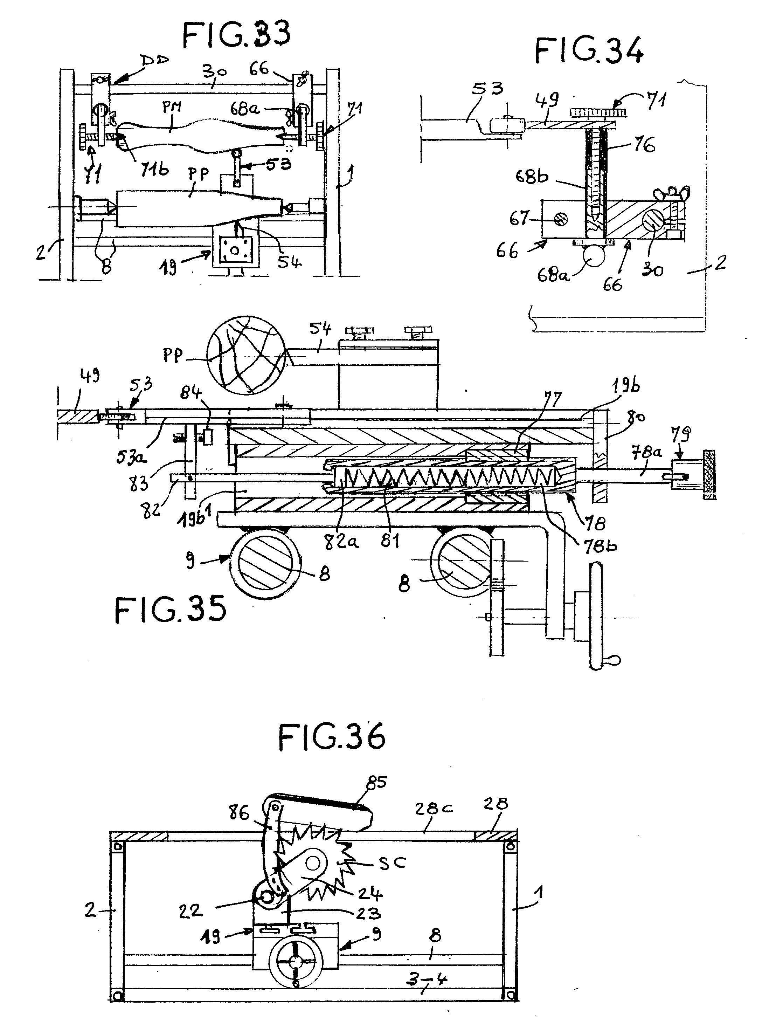

On peut également adapter sur le mécanisme d'entraînement à bielle et maneton, une scie à chantourner (SCH) dont l'extrémité supérieure est tenue par une potence (64) avec ressort de tension (65) de la scie (figure 18), ou bien par un tube (74) muni d'un ressort et d'un piston internes reliés à la scie et manoeuvrables par une douille (75). Le tube (74) est fixé dans un collier croisé (66) porté par une barre horizontale (30) elle-même reliée à un autre collier croisé (66) monté sur une autre barre (30) qui est fixée à la structure (figure 32).

On peut encore utiliser les dispositifs multi-fonctions (DD) pour la fixation des modèles à reproduire entre pointes. Pour cela, et comme illustré à la figure 33, une ou plusieurs barres (30) sont fixées bout-à-bout entre les cadres (1 et 2) de la structure. Deux colliers croisés (66) sont fixés horizontalement sur ces barres et deux équerres (68) sont montées sur les colliers pas leurs branches (68b) de telle manière que les autres branches (68a) soient perpendiculaires aux barres (30). On engage alors les vis de manoeuvre (71) dans lesdites branches (68a) afin que leurs extrémités effilées (71b) soient face à face et servent de pointes de centrage pour le modèle.

Selon une autre réalisation illustrée à la figure 34, on retrouve les barres (30) fixées aux cadres et portant les colliers croisés (66). Dans ce cas, on engage de bas en haut les équerres (68) dans les colliers par leurs branches (68b) de manière à ce que par l'intermédiaire d'une entretoise (76) on puisse fixer par les vis de manoeuvre (71), un gabarit (49) de copiage par palpeur (53).

Les barres (30) et les colliers croisés (66) peuvent encore servir de butées ou de guides réglables dans des opérations diverses, cela grâce aux multiples points de fixation des barres (30) que l'on prévoit sur les élément principaux de la structure.

Selon une autre caractéristique importante mise en oeuvre pour améliorer les opérations de copiage, on a prévu un dispositif particulier de liaison entre le palpeur (53) d'appui contre un gabarit ou une pièce modèle et le chariot croisé (19). A cet effet, et comme illustré à la figure 35, la partie supérieure (19b) du chariot présente un alésage (19b1) dans lequel est inséré à l'extrémité arrière un écrou fixe (77) destiné à coopérer avec une vis (78) dont la partie arrière (78a) est solidarisée à un vernier (79) après passage par un palier (80). Dans sa partie avant, la vis (78) présente un alésage débouchant d'un côté (78b) dans lequel est engagé un ressort à boudins (81) en appui entre le fond de l'alésage et l'extrémité élargie (82a) d'une tige (82) qui est retenue dans l'alésage par tous moyens tels que sertissage. La tige (82) est reliée à une patte (83) elle-même solidaire de la tige (53a) du palpeur qui est montée de manière réglable sur la partie supérieure (19b) du chariot. Une butée réglable (84) est prévue entre la patte (83) et la face avant du chariot.

Avec ce montage particulier, on comprend qu'une fois le réglage du palpeur effectué, la pression de contact reste sensiblement constante entre le palpeur et le gabarit ou la pièce modèle ; lorsqu'on recule le chariot on ne modifie pas le réglage de tension.

Selon une autre caractéristique, destinée à renforcer la sécurité, la scie circulaire (SC) montée sur le bras pivotant (24) et la broche (26) est protégée par un carter (85) en forme de U qui repose à l'avant sur la table (28) et est articulé à l'arrière à un couteau diviseur (86) monté sur le bras (24) afin de suivre les mouvements de la scie (figure 36).

Pour multiplier encore les possibilités de travail et en profitant du fait que la structure présente des cadres (1 et 2) formant plateau, on a positionné sur l'un de ces cadres, le cadre (2) par exemple, un étau de serrage à mors parallèles (ES) permettant d'effectuer des opérations de tronçonnage, de perçage, de fraisage... avec l'organe moteur (P) fixé sur le chariot et déplacé en translation par tous les moyens décrits précédemment.

Cet étau illustré aux figures 21 et 22, est constitué par une semelle (87) à fixation réglable sur le cadre (2) et portant un bloc-support (88) pour un mors fixe (89). A la partie inférieure du bloc et sous le mors fixe sont fixées perpendiculairement des coulisses parallèles (90) sur lesquelles peut être déplacé un bloc-support (91) pour un mors mobile (92). Dans le bloc-support (91) est logée une noix (93) de blocage par sa gorge (93a) sur les coulisses (90) par traction vers le haut ; ladite noix étant indexée en rotation par une vis (94) la traversant et débouchant sur la face avant du bloc pour assurer le serrage complet des pièces par le mors mobile monté et guidé sur des vis de pression (95).

A noter que les coulisses (90) ont des extrémités taraudées pour recevoir éventuellement les barres (30) afin de constituer des rallonges.

On voit encore à la figure 23 que l'on peut effectuer l'affûtage des scies circulaires en les positionnant sur la table (32) relevée et en fixant sur la broche (26) reliée à l'organe moteur (P) une meule appropriée (M). Une butée à ressort (96) est interposée dans le champ de déplacement de la scie pour l'indexer dent par dent.

Suivant une autre mise en oeuvre des barres (30) illustrée à la figure 38, il est possible de percer à grande profondeur des orifices avec l'organe moteur (P) fixé sur le chariot (19).

Pour cela, on place la partie supérieure (1b) du cadre (1) extérieurement à la structure en la reliant au cadre (2) par des barres (30). On monte sur ces barres une contrepointe (97) pour tenir la pièce à percer dont l'autre extrémité est centrée dans une cloche (98) engagée dans le collier (44) de fixation de l'organe moteur et dans lequel passe le foret. On dispose ainsi de toute la course possible du chariot pour effectuer des perçages borgnes directs ou débouchants par retournement.

Comme on le voit à la figure 20, une ou des brides escamotables (99) peuvent être prévues à partir des cadres (1 et 2) pour fixer la structure sur un plan de travail quelconque, et un bouton d'arrêt d'urgence (100) est disposé en un endroit très accessible de la structure.

Enfin, un plateau diviseur (60) indexé sur la broche (26) en position dans le collier (44) et sur le cadre (2), peut être adapté pour réaliser des opérations de fraisage par reproduction en position horizontale du bâti ou de fraisage ou de perçage en position verticale du bâti (figure 19).

A noter encore qu'un piètement fixe ou amovible peut être adapté sous le bâti et qu'un espace de rangement (tiroir, bac, rayonnage...) peut être aménagé dans le bâti pour disposer les accessoire et les outils.

Ainsi réalisée, la structure selon l'invention permet de réaliser sensiblement toutes les opérations d'usinage de matériaux tendres tels que le bois, les matières plastiques, les aciers doux, les alliages légers.

Evidemment, il est parfaitement possible de concevoir des versions simplifiées à partir de la structure de base, si l'on veut réaliser sulement certaines opérations.

A titre indicatif, on énumère ci-après les diverses opérations possibles avec les capacités approximatives pour chacune d'entre elles :

SCIAGE :
lame de 140 à 160 mm de diamètre ou scie sauteuse à découper
hauteur de coupe 0 à 50 mm
table extensible jusqu'à800 mm
délignage maximum 800 mm

DEGAUCHISSAGE :
outil en carbure largeur 82 mm
profondeur de passe maxi 2 mm
demi-tables de 80 x 450 mm

RABOTAGE :
largeur de coupe 82 mm
hauteur 80 mm
profondeur de passe maxi 2 mm

TOUPILLAGE :
avec fraises de défonçeuse serrées par pince
table de 320 x 600 mm

MORTAISAGE-RAINURAGE :
diamètre 13 mm, longueur 380 mm, profondeur 80 mm
table 270 x 600 mm

CHANTOURNAGE :
hauteur de coupe 60 mm
table de 800 x 600 mm

PERCAGE :

| | |
|---|---|
| a) vertical | : diamètre 10 mm dans l'acier |
| | course 380 mm |
| | perçage inclinable de 0 à 90° |
| b) horizontal | : possibilité de perçage par retournement |
| | longueur 750 mm |

TOURNAGE :

| | | |
|---|---|---|
| a) tour à bois | : diamètre maxi en plateau | 200 mm |
| | entre pointes | 110 mm |
| | longueur maxi entre pointes | 900 mm |
| b) tour parallèle | : même capacités, course longitudinale 380 mm, transversale 80 mm | |
| c) tour à copier | : mêmes capacités | |

PONCAGE-AFFUTAGE :
avec disque diamètre 125 mm sur plateau rigide et table 540 x 150 mm, inclinable de 0 à 90°.

FRAISAGE VERTICAL :
Passage sous tête 300 mm - plateau diviseur. Course du chariot croisé 80 x 80 mm.

TRONCONNAGE :
avec déplacement chariot par le levier ou l'ensemble pignon-crémaillère.

Les avantages ressortent bien de la description, en particulier on souligne, l'universalité de la structure, sa légèreté et sa compacité lui permettant d'être aisément transportable en tous lieux et notamment sur les chantiers et dans les habitations particulières. La structure polyvalente est de mise en oeuvre rapide et facile et ainsi elle s'adresse aussi bien aux professionnels (menuisiers, maquettistes, modeleurs, installateurs...) qu'aux particuliers. Ses multiples variantes d'équipement à partir de la structure de base permettent d'offrir des modèles sur mesures aux utilisateurs : les nombreuses possibilités d'utilisation des dispositifs multi-fonctions (DD) avec les barres (30) ; la tension constante du palpeur en appui sur le gabarit ou la pièce modèle par son montage élastique sur le chariot croisé ; l'étau à mors parallèles fixé sur la structure pour réaliser aisément certaines opérations ; les accessoirs de sécurité (brides, carters, bouton d'arrêt...).

## Revendications

-1- Structure polyvalente pour tous travaux d'usinage principalement de matériaux tendres, caractérisée en ce qu'elle comprend un bâti rigide (8) de forme générale parallélépipédique qui comprend deux cadres parallèles (1 et 2) reliés entre eux en partie base par deux traverses fixes (3 et 4) et équipée de traverses mobiles (5, 6 et 7) ; dans leur partie médiane lesdits cadres portant des coulisses parallèles (8) pour le guidage et le déplacement de moyens associés à un porte-outils (23) et à un moteur d'entraînement (P) en rotation des outils ; des moyens complémentaires de guidage, de support et d'entraînement pour des organes et dispositifs annexes autorisant en combinaison avec lesdits outils motorisés, une pluralité d'opérations d'usinage différentes sur des matériaux divers, aussi bien avec le bâti positionné verticalement qu'horizontalement ; ledit bâti étant également équipé d'un moyen de transport manuel.

-2- Structure polyvalente selon la revendication 1, caractérisée en ce que les moyens de guidage à coulissement et de support orientable sont constitués d'un traînard (9) assujetti aux coulisses (8) et d'un chariot croisé (19) dont le socle (19a) est monté rotatif sur le traînard, et dont le chariot transversal (19b) réglable en translation par rapport au socle, porte de manière réglable le porte-outils (23) ou une tourelle (47) et un collier de serrage (20) du moteur de commande (P).

-3- Structure polyvalente selon la revendication 1, caractérisée en ce que pour permettre les opérations d'usinage avec axe moteur vertical ou horizontal, le traînard (9) est associé à un organe manuel de commande en translation relié au bâti, du type pignon (10) - crémaillère (11) avec volant de manoeuvre (12), vis-écrou débrayable (13), ou levier (16) articulé au bâti et relié avec jeu au traînard, avec tube coulissant (14) et ressort télescopique (15).

-4- Structure polyvalente selon la revendication 1, caractérisée en ce que la traverse (5) du bâti porte un support de délignage (61) par ses barres (5a) engagées à coulissement dans les profilés supérieurs des cadres (1 et 2) ; des barres supplémentaires (30) peuvent être fixées aux barres (5a) pour constituer des rallonges de table et pour faire office de poignée de transport manuel de la structure lorsqu'elles sont solidarisées verticalement auxdits cadres.

-5- Structure polyvalente selon la revendication 1, caractérisée en ce que le porte-outils équerré (23) assujetti par sa semelle (23a) sur le moyen-support orientable (19), reçoit à pivotement limité sur sa branche verticale (23b) un bras portant une broche (26) de fixation des outils par nez, mandrin, pince ou autre ; l'axe (22) d'articulation dudit bras étant agencé pour coopérer angulairement avec l'arbre de sortie de l'organe moteur équipé à cet effet d'un dispositif d'entraînement (P1) ; une transmission appropriée (22a - 26a -27) relie l'axe (22) et la broche (26), et un système vis-crémaillère (62) assure le réglage angulaire du bras porte-broche.

-6- Structure polyvalente selon la revendication 1, caractérisée en ce que le bâti (B) est fermé à sa partie supérieure par une table (28) asemblée de manière démontable par rapport aux cadres (1 et 2) et selon plusieurs positions correspondant à diverses opérations, ladite table présente sur sa surface, une fente longitudinale (28a) autorisant le passage d'un outil du genre scie circulaire (SC), scie sauteuse ou autre (SS) monté sur le porte-outils (23), une échancrure latérale et médiane (28c) pour le passage d'un outil de moulurage (M) et une rainure longitudinale (28b) pour un guide de coupe orientable (29) comprenant un support (29a) en équerre sur lequel peut être réglé un renvoi équerré (29b), reçoit un support de tenonnage (29c) avec capot de protection (29d) contre lequel est butée la pièce à usiner qui est tenue par un dispositif multi-fonctions (DD) associé à une barre (30) fixée sur ledit support (29c).

-7- Structure polyvalente selon la revendication 1, caractérisée en ce que, entre les cadres (1 et 2) du bâti (B), s'articule, suivant deux niveaux, une table (32) qui constitue un carter de protection et un guide de ponçage, d'affûtage ou dégauchissage lorsqu'elle est rabattue contre le bâti dans sa position haute, ou de table de toupillage dans une position basculée à 90° du bâti, avec passage de l'outil (T) dans une ouverture (32a) de la table, tandis que, lorsque la plaque èst relevée horizontalement ou inclinée et articulée en position basse, elle permet des opérations de perçage ou de rainurage.

-8- Structure polyvalente selon les revendications 1 et 7 ensemble, caractérisée en ce que le bâti (B) est agencé à sa base et latéralement pour recevoir à coulissement contrôlé un ensemble dégauchisseuse-raboteuse (E) escamotable à l'intérieur dudit bâti en vue du transport : l'outil rotatif (38) commun au dégauchissage et au rabotage étant relié par une transmission appropriée (39, 40, 41) à l'organe moteur (P), par l'intermédiaire de la broche (26).

-9- Structure polyvalente selon la revendication 8, caractérisée en ce que l'ensemble (E) coulissant dans le bâti par des barres (33) est composé de deux traverses (34 - 35) entre lesquelles sont fixées deux demi-tables (36 - 37) de dégauchissage décalées dans la hauteur avec passage entre elles de l'outil rotatif (38), et d'un support (42) de rabotage fixé de manière réglable en hauteur sur la traverse avant (34) ; des rouleaux (43) montés à rotation libre et en rappel élastique entre les traverses de part et d'autre de l'outil autorisant l'entraînement de la pièce à usiner manuellement ou par un moyen associé à l'un des rouleaux.

-10- Structure polyvalente selon la revendication 1, caractérisée en ce que l'un des cadres du bâti (1) par exemple, est exécuté en deux parties séparables (1b - 1c), la partie supérieure (1b) étant enlevée pour laisser le passage à l'organe moteur (P) en position verticale du bâti pour des opérations de perçage ou fraisage ; ladite partie (1b) étant alors assujettie à l'autre cadre afin de constituer une rallonge de table.

-11- Structure polyvalente selon les revendications 1 et 2 ensemble, caractérisée en ce que le cadre (2) du bâti est équipé d'un collier de serrage (44) pour le montage et la fixation à l'extérieur de l'organe moteur (P), soit directement soit par une semelle sur laquelle est fixé, de manière réglable, le collier équerré (20) supportant l'organe moteur relié à la broche (26) par un organe entraîneur, en vue d'opérations de tournage en l'air, ou de tournage entre pointes par l'adaptation d'une contrepointe mobile (46) sur les coulisses (8) du bâti.

-12- Structure polyvalente selon les revendications 4 et 11 ensemble, caractérisée en ce que, pour augmenter les capacités de tournage et de sciage, les rallonges (30) sont assemblées aux coulisses (8) et à la traverse (5) avec piètement stabilisateur à l'arrière par exemple avec la partie amovible (1b) du cadre (1).

-13- Structure polyvalente selon les revendications 2, 3 et 11 ensemble, caractérisée en ce que, pour le tournage en l'air ou entre pointes classiques et/ou avec copiage longitudinal ou frontal or longitudinal, le déplacement longitudinal du traînard (9) est commandé par pignon-crémaillère ou par vis-crou à entraînement manuel par volant ou automatique par réducteur à engrenages.

-14- Structure polyvalente selon la revendication 13, caractérisée en ce que pour le copiage longitudinal ou frontal, des pointes mobiles (48) sont montées coulissantes sur une traverse assujettie au bâti pour le montage d'une pièce modèle (PM), ou des gabarits en tôle (49) sont pincés entre deux traverses fixées entre les cadres (1 et 2) du bâti ou à l'intérieur du cadre (2) ; lesdits gabarits étant parcourus par un palpeur (53) fixé sur le chariot et relié à un outil de profilage (54) monté sur le chariot croisé (19), avec déplacement par poignée de manoeuvre (55) après débrayage des commandes classiques, et rappel élastique approprié.

-15- Structure polyvalente selon la revendication 2, caractérisée en ce qu'un dispositif (D), de tout type convenable et monté à la sortie d'entraînement de l'organe moteur, est mis en oeuvre pour transformer le mouvement rotatif donné par l'organe moteur (P) en un mouvement rectiligne alternatif destiné à entraîner une scie sauteuse (SS) et une scie à chantourner (SCH) guidée dans ses déplacements en-dessous de la table de sciage.

-16- Structure polyvalente selon la revendication 11, caractérisée en ce qu'un plateau diviseur (60) est indexé sur la broche (26) du porte-outils en position dans le collier (44) et sur le cadre (2), pour réaliser des opérations de perçage-fraisage ou de perçage en position verticale et en position horizontale du bâti, pour des opérations de perçage et de fraisage en reproduction.

-17- Structure selon la revendication 4, caractérisée en ce que les barres (30) sont associées à des dispositifs démontables et multi-fonctions (DD) comprenant chacun un collier croisé (66), une équerre à section cylindrique (68), un galet cylindrique (69), une vis de manoeuvre (71), et des moyens de vissage et de serrage (67 - 70) ; ces éléments étant judicieusement assemblés entre eux et avec une barre (30) pour réaliser différents organes tels que guides, rallonges, supports contrepointes, butées, presseurs, vérins, dans le cadre des nombreuses opérations d'usinage réalisées avec la structure et ses équipements.

-18- Structure selon la revendication 17, caractérisée en ce que chaque collier croisé (66) est constitué d'un bloc parallélépipédique (66a) présentant deux fentes d'extrémité (66b) orientées à 90° l'une de l'autre et débouchant dans deux orifices circulaires (66c) orientés de la même manière, destinés l'un au passage d'une barre (30) et l'autre au passage d'une des branches de l'équerre (68) ; une visserie appropriée (67) traversant chaque fente pour assurer le serrage de ladite barre et de ladite branche.

-19- Structure selon la revendication 17, caractérisée en ce que chaque équerre de section cylindrique (68) est constituée d'une branche (68a) plus longue que la branche (68b) ; la branche (68a) présente près de son extrémité libre un taraudage transversal (68a1) destiné au montage de la vis de manoeuvre (71), tandis que la branche (68b) présente un épaulement (68b1) pour le montage à rotation libre et en butée du galet (69) qui y est retenu en translation par une vis (70) engagée dans un taraudage axial (68b2) à l'extrémité de ladite branche.

-20- Structure suivant la revendication 17, caractérisée en ce que la vis de manoeuvre (71) présente une tête de préhension (71a) dimensionnée pour être aisément manoeuvrable et pour constituer une surface d'appui importante, tandis que l'autre extrémité (71b) est effilée pour servir de centrage du type contrepointe pour les pièces à usiner par tournage ; ladite vis (71) est avantageusement celle qui coopère avec une barre (30) et une traverse amovible (6 ou 7) pour constituer la poignée de transport.

-21- Structure selon les revendications 17 et 19 ensemble, caractérisée en ce que la branche (68b) de l'équerre à section cylindrique (68) présente sur une partie de sa hauteur une rainure (68b3) destinée à guider une lame de scie sauteuse (SS) après positionnement en alignement de ladite branche portée par le collier croisé (66) lui-même assujetti à une barre (30) solidarisée à la structure.

-22- Structure selon la revendication 17, caractérisée en ce que les dispositifs multi-fonctions (DD) sont fixés par les colliers croisés (66) sur une ou plusieurs barres (30) ajoutées bout-à-bout et fixées à l'un des cadres (1 ou 2) ou aux deux cadres extérieurement à la structure, pour constituer des rallonges de tables de sciage ou de rabotage ; les pièces longues à travailler reposant sur les galets (69) alignés avec lesdites tables.

-23- Structure selon la revendication 17, caractérisée en ce que pour tendre et tenir une lame de scie à chantourner (SCH) un ensemble de deux barres (30) reliées à angle droit par un collier croisé (66) est positionné sur la structure ; la barre (30) horizontale portant un deuxième collier croisé (66) dans lequel est engagé un dispositif tendeur du genre tube-vérin (74 - 75) associé à la lame de scie.

-24- Structure selon la revendication 17, caractérisée en ce que pour tenir ou éviter le relevage des pièces pendant le travail, un ou des organes presseurs (72) sont positionnés sur un ou des colliers croisés (66) portés par des barres (30) ; lesdits organes presseurs pouvant être constitués directement par les équerres à section cylindrique (68) ou par les vis de manoeuvre (71).

-25- Structure selon la revendication 14, caractérisée en ce que la liaison entre le palpeur (53) et le chariot croisé (19) est constituée par un dispositif assurant une tension constante d'appui du palpeur sur le gabarit ou la pièce modèle ; ledit dispositif est composé d'une vis creuse (78) de commande en translation de la partie supérieure (19b) du chariot par un vernier (79) ; ladite vis présentant intérieurement un ressort à boudin (81) retenu par une tige (82) de liaison avec le palpeur (53) solidaire de la partie supérieure (19b) du chariot.

-26- Structure selon la revendication 5, caractérisée en ce que, pour renforcer la sécurité, un carter profilé (85) recouvre la scie circulaire (SC) en étant en appui sur la table de sciage et articulé à un couteau diviseur (86) porté par le bras (24) pour suivre les mouvements de la scie.

-27- Structure selon la revendication 1, caractérisée en ce qu'un étau à mors parallèles (ES) est fixé sur l'un des cadres (1 ou 2) de la structure ; ledit étau présentant notamment des coulisses parallèles (90) de réglage du mors mobile dont les extrémités sont agencées pour recevoir des barres (30) de rallonge.

-28- Structure selon la revendication 7, caractérisée en ce que la table rabattable (32) est équipée pour fixer les scies circulaires en vue de leur affûtage par une meule (M) portée par l'organe moteur (P) fixé sur le chariot croisé (19) ; une butée élastique (96) étant interposée dans le champ de déplacement de la scie pour l'indexer dent par dent.

-29- Structure selon les revendications 10 et 11 ensemble, caractérisée en ce que des barres (30) sont fixées extérieurement au cadre (2) et supportées par la partie supérieure (1b) de l'autre cadre (1) dissociée de sa partie basse (1a), afin de constituer une rallonge pour le montage d'une contrepointe (97) de centrage d'une pièce centrée d'autre part dans une cloche (98) montée dans le collier (44) équipant le cadre (2) ; ladite pièce pouvant être ainsi percée sur une grande profondeur par un foret positionné dans l'organe moteur fixé sur le chariot croisé (19).

FIG.1

SC
28a
26
28b
28
23
22
24
28c
30
20
P¹
P
7
30
42a
19b
6
38 37
19
19a
33
36
35
31
34
32
5a
43
40
32a
1b
42
1
33
44
1a
2
3
9
5a
61
B
4
5

EP 0 354 136 A1

FIG.2

FIG.3

FIG.4

FIG.5

FIG.6

FIG.7

EP 0 354 136 A1

FIG.8

FIG.9

FIG.10

FIG.11

FIG.13

FIG.12

FIG.14

FIG.17

FIG.15

FIG.18

FIG.16

FIG.19

FIG.22

FIG.21

FIG.23

FIG.20

FIG.24

FIG.25  26

FIG.26

FIG.27

EP 0 354 136 A1

## FIG.28

61   5

5a

30

66

72   73

## FIG.29

68b   67

66

30

71

26   71a

T

28

## FIG.30

66   66   66

68b

68b

30

68a   71a

## FIG.31

68a

66   30   66

68b³

68b

30

SS

72

28

5a   5

D   11

## FIG.32

30

74

67

30   66

75

SCH   28

FIG.33

FIG.34

FIG.35

FIG.36

**FIG. 37**

**FIG. 38**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 527 969 (POINCENOT) * Figures 1-4; page 3, lignes 20-35 * | 1-3,5-7 | B 25 H 1/04 |
| A | | 26 | B 25 H 1/10 |
| | --- | | B 23 D 45/06 |
| D,Y | US-A-3 036 608 (WEBER) * Figures 1-8 * | 1-3,5-7 | B 23 D 57/00 B 27 C 9/04 |
| | --- | | |
| D,Y | CA-A-1 078 709 (FEHRIC) * Figures 1-3 * | 2 | |
| A | | 1,6 | |
| | --- | | |
| D,A | FR-A-2 578 770 (PIGNOL) * Figures 6-8,12-14,19,24,28; revendication 1 * | 1-3,11, 13-15, 25 | |
| | --- | | |
| A | US-A-3 304 969 (MacDOUGALL) * Figures 1,2,7,8 * | 1,3,11, 15 | |
| | --- | | |
| A | FR-A-2 032 572 (PIEMONT) * Figures 1,2,5,6 * | 1,5-8 | |
| | --- | | DOMAINES TECHNIQUES RECHERCHES (Int. Cl.5) |
| A | EP-A-0 260 199 (PELLONI) * Figure 1 * | 1,7,27 | |
| | --- | | B 25 H |
| A | US-A-2 599 096 (DIRKSEN et al.) * Figure 3 * | 1,7 | B 23 D B 27 C |
| | --- | | |
| A | DE-U-8 708 950 (EPPING) * Figure 2 * | 1 | |
| | --- | | |
| A | DE-B-1 193 888 (SUSEMIHL) * Figures 1-9 * | 1 | |
| | --- | | |
| A | US-A-4 516 612 (WILEY) * Figures 1,2 * | 1 | |
| | ---       -/- | | |

Le présent rapport a été établi pour toutes les revendications

| Lieu de la recherche | Date d'achèvement de la recherche | Examinateur |
|---|---|---|
| LA HAYE | 02-11-1989 | CARMICHAEL D.G. |

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 601 226  (McCLINTOCK) <br> * Figure 1 * <br> --- | 1 | |
| A | DE-B-1 298 846  (GRABBE) <br> * Figure 3 * <br> --- | 3 | |
| A | FR-E-   81 267  (LEFORT) <br> * Figures 1,2 * <br> --- | 5 | |
| A | US-A-4 677 920  (ECCARDT) <br> * Figure 1; colonne 1, lignes 19,20 * <br> --- | 26 | |
| A | US-A-1 860 071  (BODKIN) <br> * Figure 1 * <br> --- | 27 | |
| A | US-A-2 599 170  (FRANKS) <br> --- | | |
| A | FR-A-2 092 962  (MAILLOT) <br> --- | | |
| A | US-A-4 173 849  (MAR) <br> --- | | |
| A | DE-B-1 288 405  (JÄGERS) <br> --- | | **DOMAINES TECHNIQUES RECHERCHES (Int. Cl.5)** |
| A | GB-A-2 122 526  (TEKRON LICENSING B.V.) <br> --- | | |
| A | US-A-3 316 946  (RYAN et al.) <br> ----- | | |

Le présent rapport a été établi pour toutes les revendications

| Lieu de la recherche | Date d'achèvement de la recherche | Examinateur |
|---|---|---|
| LA HAYE | 02-11-1989 | CARMICHAEL D.G. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)